(19) Europäisches Patentamt
European Patent Office
Office européen des brevets

(11) EP 2 862 864 A1

(12) # DEMANDE DE BREVET EUROPEEN

(43) Date de publication:
**22.04.2015 Bulletin 2015/17**

(51) Int Cl.:
***C07F 5/02*** *(2006.01)*

(21) Numéro de dépôt: **14188867.7**

(22) Date de dépôt: **14.10.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **18.10.2013 FR 1302425**
**25.11.2013 FR 1361559**

(71) Demandeur: **Yriel**
**75013 Paris (FR)**

(72) Inventeurs:
- **Pilia, Raimondo**
**820 MONTREUX (CH)**
- **Trani, Alexandre**
**06510 CARROS (FR)**
- **Alves, Emmanuel**
**94400 VITRY SUR SEINE (FR)**

(74) Mandataire: **Schmidt, Martin Peter**
**IXAS Conseil**
**15, rue Emile Zola**
**69002 Lyon (FR)**

(54) **Procédé continu de préparation d'acides boroniques et de leurs dérivés**

(57) Procédé continu de préparation d'un acide boronique de type R-B$(OH)_2$ dans lequel R représente un reste aliphatique, acyclique ou cyclique, ou un reste aromatique, par action d'un borate de trialkyle sur un agent de métallation de type R-M (où M représente un métal alcalin) ou un réactif de type Grignard de type R-Mg-X (où X est le chlore ou le brome), ledit procédé étant exécuté dans un système comprenant un premier réacteur piston et un second réacteur piston, mis en série, les deux réacteurs piston étant de préférence de forme cylindrique, lesdits réacteurs pistons étant pourvus d'un moyen mécanique d'agitation axiale, et dans lequel procédé :
◦ on prépare dans le premier réacteur piston un intermédiaire réactionnel R-M ou R-Mg-X par réaction de métallation entre une solution comprenant au moins un composé porteur du reste cyclique R, notamment un composé aliphatique, acyclique ou cyclique, ou un composé aromatique, et un agent de métallation ;
◦ on fait entrer, de préférence de manière continue et séparée, de préférence à une extrémité du second réacteur, au moins une solution comprenant ledit intermédiaire réactionnel R-M ou R-Mg-X et au moins une solution comprenant un borate de trialkyle ; et on soumet le mélange réactionnel contenu dans le second réacteur à une agitation mécanique axiale ;
◦ on injecte dans le second réacteur, de manière continue, en aval de l'entrée du milieu réactionnel en provenance de la sortie du premier réacteur (par exemple à environ mi-parcours du mélange réactionnel dans le second réacteur ou en sortie du second réacteur), une solution aqueuse comprenant éventuellement un acide, tel qu'un acide minéral, et de préférence un hydracide halogéné, pour hydrolyser le mélange réactionnel et obtenir ledit acide boronique cyclique R-B$(OH)_2$.



Printed by Jouve, 75001 PARIS (FR)

## Description

### Domaine technique de l'invention

La présente invention concerne le domaine de la synthèse organique, et plus précisément la préparation d'acide boroniques. Elle concerne en particulier la préparation d'acides boroniques, et de leurs dérivés par action d'un borate de trialkyle sur un agent de métallation de type organolithium, organosodium ou organopotassium, ou un réactif de type Grignard dans un procédé continu.

### Etat de la technique

Les acides boroniques et leurs dérivés sont utiles comme des molécules intermédiaires de certaines synthèses organiques, telles que le couplage de Suzuki. Depuis sa découverte en 1979, cette réaction a suscité un très grand intérêt, notamment pour la synthèse de nouveaux principes actifs pharmaceutiques. Un grand nombre d'acides boroniques et de leur dérivés (tels que les esters boroniques) sont maintenant dans le commerce. Parmi les acides boroniques, les acides boroniques cycliques, c'est-à-dire les acides $R\text{-}B(OH)_2$ dans lesquelles R représente un reste cyclique, présentent un intérêt particulier car ils donnent accès à de nombreux éléments structuraux difficiles à obtenir par d'autres méthodes. A titre d'exemple, les acides arylboroniques permettent la synthèse de biphenyldioles, qui donnent un accès commode à l'élément structural du carbzaole.

A titre d'exemple, une voie de synthèse de l'ellipticine à plusieurs étapes implique le couplage croisé selon Suzuki-Miyaura de l'acide 2-hydroxybenzeneboronique au 4-hydroxy-3-iodo-2,5-diméthylbenzaldehyde pour former le biphényldiole correspondant (voir: T. Konakara et al. « An expedient synthesis of ellipticine via Suzuki-Miyaura coupling », Tetrahedron Letters 51 (17), p. 2335-2338 (2010)), selon le schéma suivant :

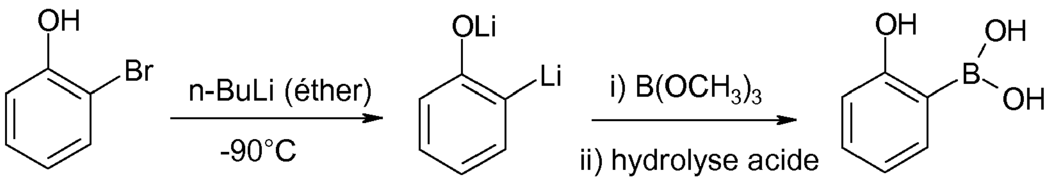


L'ellipticine, une molécule à effet anti-cancéreux, isolée en 1959 à partir des feuilles d'*Ochrosia elliptica*, mais dont l'utilisation thérapeutique n'a pas été poursuivie, continue à présenter un grand intérêt pour la recherche pharmaceutique, dans le but de trouver des dérivées à action plus spécifique et avec moins d'effets secondaires.

On connaît plusieurs méthodes pour préparer des acides arylboroniques ; il s'agit souvent de composés à haut point de fusion. La méthode la plus versatile fait intervenir un composé d'aryllithium que l'on fait réagir avec le triméthylester de l'acide boronique pour former un méthylester de l'acide arylboronique visé ; ce méthylester peut ensuite être hydrolysé pour obtenir l'acide libre. Cette méthode est décrite par Gilman et al. (« Hydroxybenzeneboronic Acide and Anhydrides », J. Am. Chem. Soc. 79, p. 3077-3081 (1957)) pour le cas de la synthèse de l'acide hydroxybenzène boronique à partir d'un bromophénol avec du n-butyllithium.

L'inconvénient de cette méthode réside dans la préparation et l'utilisation d'un composé organométallique d'un élément alcalin (tel qu'un aryllithium) ou d'un réactif de Grignard, qui doivent se faire à basse température (typiquement entre -100°C et -50°C) à cause de l'instabilité des composés organométalliques en question et pour éviter la formation de produits secondaires : il s'agit d'une synthèse potentiellement dangereuse.

A titre d'exemple, la demande de brevet WO 2003/091262 (Symyx Technologies Inc.) décrit un procédé de préparation de l'acide 2-hydroxy phényl boronique dans un procédé batch à plusieurs étapes, dans lequel on protège d'abord le groupe hydroxylique du 2-bromophénol avec du dihydropyrane, on fait réagir la molécule qui en résulte avec du butyllithium à -78°C dans du THF, on fait réagir le dérivé de phényllithium avec du tri-isopropylborate à - 78°C, on déprotège le groupe hydroxylique et procède à l'hydrolyse du di-isopropylborate pour obtenir l'acide visé. Ce document représente de manière typique l'état de la technique.

Une méthode alternative a été décrite par Yuen et Hutton (« Deprotection of pinacolyl boronate esters via hydrolysis of intermediate potassium trifluoroborates », Tetrahedron Lettres 46, p. 7899-7903 (2005)) ; elle suppose la disponibilité de l'ester pinacolylique du dérivé de l'acide boronique souhaité.

Les procédés de l'état de la technique sont exécutés en mode « batch », c'est-à-dire dans un réacteur statique de type autoclave agité. Les réacteurs de type batch et les réacteurs continus se distinguent fortement, pour des raisons techniques et pour des raisons pratiques. Sur le plan technique, pour une réaction exothermique telle que la réaction entre un aryllithium et un ester de trialkyle de l'acide boronique, le transfert de chaleur est un paramètre critique, à la fois pour la conception du réacteur et pour la conduite du procédé. C'est surtout pour un réacteur de type batch que

l'augmentation de la taille du réacteur (« scaling-up »), et donc l'augmentation de sa capacité de production, est limitée par le transfert thermique. Plus on augmente la taille du réacteur de type autoclave pour gagner en productivité, plus le transfert thermique se dégrade. Dans des réacteurs de grande capacité, il est souvent nécessaire de diluer fortement les réactifs par ajout de solvant pour être capable de contrôler l'exothermie de la réaction. Cependant, l'ajout d'un solvant nécessite ensuite une étape de séparation pour isoler le produit de la réaction du solvant.

Sur le plan pratique, un procédé discontinu nécessite à la fin de la réaction la dépressurisation du réacteur (si la réaction a eu lieu sous pression), son refroidissement, son ouverture, et sa vidange pour récupérer le mélange réactionnel dans des bonnes conditions de sécurité ; ces opérations discontinues sont complexes et coûteuses en main d'oeuvre. En plus, le coût d'investissement d'un réacteur de type autoclave est élevé. On aurait donc tendance à préférer un procédé continu, au moins pour des produits que l'on veut fabriquer en une quantité assez importante. En mode discontinu (mode « batch »), des systèmes d'agitation ont été développés spécifiquement pour améliorer le transfert de masse. En mode continu, sans agitation, le transfert de masse peut être relativement peu efficace.

A titre d'exemple, la demande de brevet WO2013/040479A1 décrit un procédé continu de formation d'acide boronique dans lequel on approvisionne dans un premier réacteur un mélange comprenant un agent de métallation (le n-butyllithium) avec un composé aromatique (le 2-chloro-6-fluoroanisole). Le mélange réactionnel obtenu est par la suite introduit dans un second réacteur dans lequel on ajoute de manière continue une solution de borate de trialkyle, le triméthylborate. Dans une étape séparée, le mélange réactionnel est ensuite converti en l'acide boronique correspondant. Ce procédé continu travaille à une température aussi basse que les procédés « batch » habituels et la concentration des réactifs dans leurs solvants est assez faible, ce qui conduit à une productivité assez faible de ce type de réaction.

Dans les deux types de procédés, l'utilisation de solvants présente des inconvénients d'ordre énergétique (coût de la séparation, chauffage d'une masse plus grande), environnemental (rejets) et économiques (coût de l'investissement de l'étape de séparation, coût du solvant, diminution des vitesses de réaction), on souhaite donc minimiser la quantité de solvant.

La présente invention vise donc un procédé continu de préparation d'acides boroniques aliphatiques ou aromatiques, qui soit simple, facile à contrôler, à forts rendement et sélectivité, et qui évite autant que possible l'ajout et la séparation ultérieure de solvant.

**Objet de l'invention**

Rien ne prédestine une réaction chimique qui se déroule habituellement à une température comprise entre -50°C et -100°C à être transposée dans un réacteur continu, et il ne semble exister aucune tentative publiée pour ce type de réaction. La demanderesse a trouvé de manière surprenante que la préparation d'acides boroniques de type $R-B(OH)_2$ dans lesquelles R représente un reste aliphatique, acyclique ou cyclique, ou un reste aromatique, par action d'un borate de trialkyle sur un agent de métallation, qui est un composé organométallique de type R-M (avec M = Li, Na ou K) ou un réactif de type Grignard R-Mg-X (X étant un halogène) peut être effectuée dans un réacteur continu de type piston à une température significativement supérieure à -50°C sans aucune difficulté liée à l'instabilité dudit composé organométallique.

En particulier, la préparation d'acides arylboroniques, notamment de l'acide phénylboronique, et de leurs dérivés par action d'un borate de trialkyle sur un aryllithium ou un dialkylamide de lithium, un arylsodium ou un dialkylamide de sodium, un arylpotassium ou un dialkylamide de potassium, ou un réactif de type Grignard peut être effectuée dans un réacteur continu dont la température du mélange réactionnel en sortie dudit réacteur est comprise entre 15°C et 35°C, préférentiellement entre 17°C et 30°C, et encore plus préférentiellement entre 18°C et 25°C.

Le premier objet de l'invention est donc un procédé continu de préparation d'un acide boronique de type $R-B(OH)_2$ dans lequel R représente un reste aliphatique, acyclique ou cyclique, ou un reste aromatique, par action d'un borate de trialkyle sur un agent de métallation de type R-M (avec M = Li, Na ou K) ou un réactif de type Grignard de type R-Mg-X (où X est le chlore ou le brome), ledit procédé étant exécuté dans un système comprenant un premier réacteur piston et un second réacteur piston, mis en série, les deux réacteurs piston étant de préférence de forme cylindrique, lesdits réacteurs pistons étant pourvus d'un moyen mécanique d'agitation axiale, et dans lequel procédé :

- on prépare dans le premier réacteur piston un intermédiaire réactionnel R-M ou R-Mg-X par réaction de métallation entre une solution comprenant au moins un composé porteur du reste cyclique R, notamment un composé aliphatique, acyclique ou cyclique, ou un composé aromatique, et un agent de métallation ;
- on fait entrer, de préférence de manière continue et séparée, de préférence à une extrémité du second réacteur, au moins une solution comprenant ledit intermédiaire réactionnel R-M ou R-Mg-X et au moins une solution comprenant un borate de trialkyle ; et on soumet le mélange réactionnel contenu dans le second réacteur à une agitation mécanique axiale ;
- on injecte dans le second réacteur, de manière continue, en aval de l'entrée du milieu réactionnel en provenance de la sortie du premier réacteur (par exemple à environ mi-parcours du mélange réactionnel dans le second réacteur

ou en sortie du second réacteur), une solution aqueuse comprenant éventuellement un acide, tel qu'un acide minéral, et de préférence un hydracide halogéné, pour hydrolyser le mélange réactionnel et obtenir ledit acide boronique cyclique R-B$(OH)_2$.

Le procédé selon l'invention permet notamment la préparation d'acide boronique de type R-B$(OH)_2$ dans lequel le reste R est sélectionné dans le groupe formé par :

les restes alkyle substitués ou non ; les restes cycloalkyle (notamment cyclohexyle, cycloheptyle, cyclooctyle, cyclononyle, cyclodécyle) substitués ou non ; les restes aliphatiques insaturés ; les restes aromatiques, possiblement condensés (notamment phényle, naphthyle, phénanthryle, anthracyle, les dérivés de chrysène, pyrène, tétracène, fluoranthène, coronène, benz[a]anthracène), substitués ou non ; les restes hétérocycliques aliphatiques, substitués ou non ; les restes hétérocycliques aromatiques, possiblement condensés, substitués ou non tels que les restes du furane, substitués ou non (possiblement condensés avec un ou plusieurs anneaux benzéniques, en particulier le benzofurane et l'isobenzofurane) et les restes du pyrrole, substitués ou non (possiblement condensés avec un ou plusieurs anneaux benzéniques, en particulier l'indole et l'isoindole) et les restes du thiophène, substitués ou non (possiblement condensés avec un ou plusieurs anneaux benzéniques, en particulier le benzothiophène et le benzo[c]thiophène) et les restes de l'indazole, pyrazole, oxazole, isoxazole, thiazole, substitués ou non.

Plus particulièrement, le procédé selon l'invention permet la préparation d'acides boroniques cycliques comme indiqué sur les formules (I), (II) ou (III) ci-après :

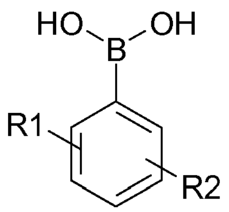
(I)

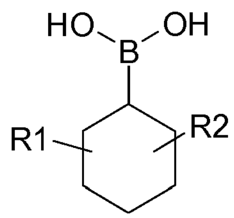
(II)

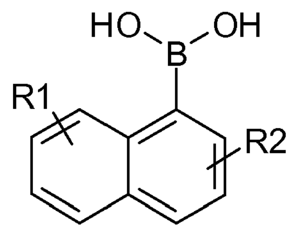
(III)

où R représente un alkyle substitué ou non, un phényle substitué ou non, ou un cyclohexane substitué ou non, ou un naphthyle substitué ou non, ou un phénanthryle substitué ou non, ou un anthracyle substitué ou non, ou un autre reste aromatique condensé (par exemple chrysène, pyrène, tétracène, fluoranthène, coronène, benz[a]anthracène), substitué ou non.

Les restes R1 et R2 symbolisent pour chaque espèce cette substitution, qui peut être une mono-substitution, une bi-substitution ou une polysubstitution, avec un, deux ou plusieurs restes identiques ou différents.

Le procédé selon l'invention permet également la préparation d'acides boroniques dans lesquelles R représente un reste hétérocyclique ou hétéroaromatique formé de six atomes et un, deux ou trois hétéroatomes, ces derniers pouvant notamment être l'oxygène, l'azote et le soufre comme indiqué sur les formules (IV), (V) et (VI) ci-dessous :

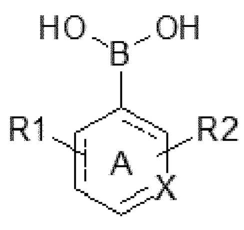
(IV)

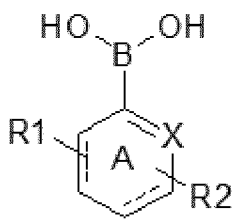
(V)

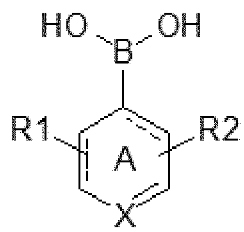
(VI)

dans lesquelles l'hétérocycle A est aromatique ou non, étant entendu que lorsque l'hétérocycle est aromatique alors X représente un atome d'azote, et lorsque l'hétérocycle A n'est pas aromatique, alors X = N, O ou S, étant entendu que lorsque X représente un atome d'azote, ce dernier est lié par une double liaison avec l'un de des carbones voisins, ou s'il n'est pas lié par une double liaison, porte un reste monovalent.

Le groupe boronique peut être en position 2, 3, 4 ou 5. La signification des restes R1 et R2 est la même que

précédemment, et la substitution peut avoir lieu en position 2, 3, 4 et/ou 5, à l'exception de la position à laquelle se trouve le groupe boronique.

Plus particulièrement, R peut représenter un reste ou hétéroaromatique formé de deux atomes d'azote, comme indiqué notamment sur les formules (VII), (VIII) et (IX) ci-dessous :

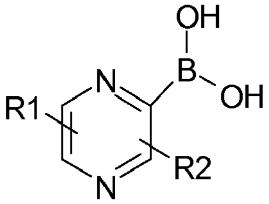
(VII)

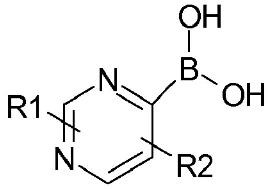
(VIII)

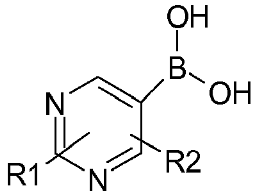
(IX)

La signification des restes R1 et R2 est la même que précédemment.

Le procédé selon l'invention permet également la préparation d'acides boroniques dans lesquelles R représente un anneau hétéroaromatique formé de cinq atomes, et en particulier les anneaux hétéroaromatiques comprenant quatre atomes de carbone et un hétéroatome, ce dernier pouvant être en particulier l'azote, le soufre ou l'oxygène, comme indiqué dans les formules (X) et (XI) ci-dessous, et R est dans ces cas notamment un furane, un pyrrol ou un thiophène ; dans tous ces cas les restes R peuvent être substitués ou non par un ou plusieurs restes R1 qui peuvent être identiques ou différents, cette substitution pouvant avoir lieu en position 1, 2, 3 et/ou 4 (à l'exception de la position à laquelle se trouve le groupe boronique) :

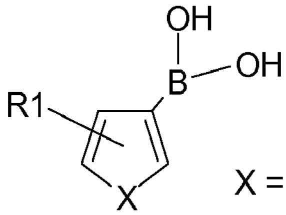
X = N ; S ; O

(X)

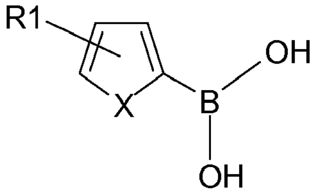
X = N ; S ; O

(XI)

étant entendu que lorsque X=N, alors l'atome d'azote est relié à un atome d'hydrogène ou éventuellement à un substituant (non représenté ici) ; et sachant que les restes de furanes, pyrrol et thiophène tels que compris ici comprennent également les restes dans lesquels le furane, pyrrol et thiophène, respectivement, est condensé avec un ou plusieurs anneaux benzéniques, substitué ou non, cette substitution pouvant être faite par un ou plusieurs restes identiques ou différents. Ainsi, les restes furane comprennent notamment le benzofurane et l'isobenzofurane, les restes pyrrole comprennent notamment l'indole et l'isoindole, les restes thiophène comprennent notamment le benzothiophène et le benzo[c]thiophène.

Le procédé selon l'invention permet également la préparation d'acides boroniques dans lesquelles R représente un anneau hétéroaromatique formé de cinq atomes avec deux hétéroatomes, comme indiqué sur les formules (XII) et (XIII) ci-dessous ; R peut ainsi représenter notamment un reste indazole, pyrazole, oxazole, isoxazole ou thiazole. Les atomes de carbone de ces anneaux hétéroaromatiques formés de cinq atomes selon les formules (XII) et (XIII) peuvent être substitués dans n'importe quelle position par un groupe R1 monovalent qui peuvent être identiques ou différents.

R peut également représenter un anneau hétéroaromatique formé de cinq atomes (dont un ou deux atomes hétéro) condensé avec un ou plusieurs anneaux benzéniques, tels que le benzoimidazole, la purine, l'imidazole, le benzoxazole, le benzoisoxazole, le benzothiazole (voir les formules (XIV), (XV) et (XVI) ci-dessous). Les cinq atomes qui forment ces anneaux hétéroaromatiques selon les formules (XIV), (XV) peuvent être substitués dans n'importe quelle position disponible par un groupe R2 ou R3 monovalent qui peuvent être identiques ou différents. De même, le ou les anneaux benzéniques condensés aux anneaux aromatiques formés de cinq atomes peuvent être substitués dans n'importe quelle position par un ou plusieurs groumes R1 monovalents qui peuvent être identiques ou différents.

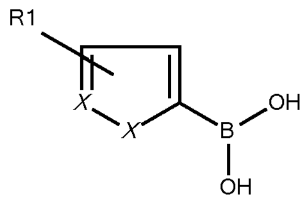

X = N, S, O

(XII)

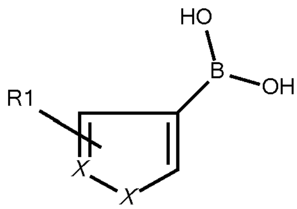

X = N ; S ; O

(XIII)

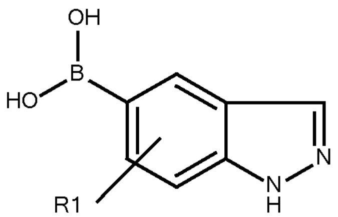

(XIV)

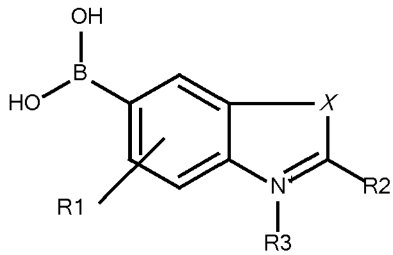

X = S,N,O, C

(XV)

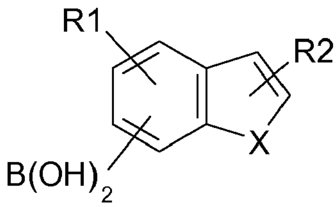

X = N, S, O

(XVI)

D'une manière particulière, pour la molécule (XVI), le groupe boronique peut être en position 2, 3, 5, 6 ou 7. La signification des restes R1 et R2 est la même que précédemment, et la substitution peut avoir lieu en position 2, 3, 5, 6 et/ou 7, à l'exception de la position à laquelle se trouve le groupe boronique ; étant entendu que lorsque X=N, alors l'atome d'azote est relié à un atome d'hydrogène ou éventuellement à un substituant (non représenté ici), éventuellement un substituant alkyle.

Plus particulièrement, dans chacune de ces molécules (XII), (XIII), (XIV), (XV) et (XVI), le reste boronique peut être situé dans n'importe quelle position sur les anneaux, et les anneaux peuvent être substitués dans n'importe quelle position par un ou plusieurs restes monovalents R1, R2 qui peuvent être identiques ou différents. L'azote peut également être substitué par un reste R3, qui peut être un reste alkyle, notamment en $C_1$, $C_2$ ou $C_3$.

Les formules (I) à (XVI) représentent toutes le reste R avec sa fonction $-B(OH)_2$. Cette fonction $-B(OH)_2$ ne fait évidemment pas partie du reste R, les formules (I) à (XVI) représentant les molécules cibles du procédé de préparation d'acides boroniques : $R-B(OH)_2$.

D'une manière générale, R peut également être un reste cycloaliphatique, substitué ou non. A titre d'exemple, R peut être un reste cycloheptyle, cyclooctyle, cyclononyle ou cyclodécyle.

R peut également être un hétérocycle aliphatique. R peut être aussi un reste aliphatique, par exemple un reste d'alkyle ou d'alkyle substitué. R peut aussi être un reste aliphatique insaturé, notamment une oléfine, linéaire ou branché.

Dans chacune des molécules (I) à (XVI), R1 et R2 peuvent être identiques ou différents et représentent un reste monovalent, qui peut notamment être un hydrogène, un reste alkyle, notamment en $C_1$, $C_2$ ou $C_3$, un reste alkyle linéaire, branché ou cyclique, substitué ou non, un reste phényle substitué ou non, ou un reste halogéné.

**Description détaillée de l'invention**

**1. Terminologie**

Le terme « alkyle » désigne une chaîne hydrocarbonée, saturée, linéaire ou ramifiée.
Le terme « alkyle substitué » désigne un groupement alkyle dont au moins un carbone porte au moins un substituant. Par « substituant », on entend notamment un halogène, un acide carboxylique, un éther-oxyde, un ester, une cétone, un dérivé nitré, un dérivé aminé, un dérivé soufré, un dérivé phosphoré.
Le terme « aryle » désigne un groupement aromatique comportant un anneau aromatique ou plusieurs anneaux aromatique condensés ou reliés entre eux par une liaison covalente ou par l'intermédiaire d'un groupe commun tel qu'un reste de méthylène ou éthylène. Plus spécifiquement, les groupes aryles peuvent comporter un ou deux ou trois anneaux aromatiques condensés ou reliés par une liaison covalente, et les exemples les plus courants sont les groupes phényle, naphthyle, biphényle, anthracényle, phénanthrenyle. Le terme « aryle substitué » désigne un groupement aryle comportant un ou plusieurs substituants (par exemple tolyle, mésityle, perfluorophényle).
Les termes « aryle comportant un hétéroatome » et « hétéroaryle » désignent un aryle dans lequel au moins un atome de carbone est remplacé par un hétéroatome ; cela inclut notamment des anneaux comme les thiophènes, pyridine, isoxazole, pyrazole, pyrrole, furane, et des analogues condensés. Dans certains modes de réalisation, les groupes condensés peuvent être substitués et liés à un autre atome. Ainsi, « naphthyle » peut désigner 1-naphthyle ou 2-naphthyle, « anthracényle » peut désigner 1-anthracényle, 2-anthracényle ou 9-anthracényle, et « phénanthrényle » peut désigner 1-phénanthrényle, 2-phénanthrényle, 3-phénanthrényle, 4-phénanthrényle ou 9-phénanthrényle.
Le terme « aralkyle » désigne un groupe alkyle portant un substituent d'aryle, et le terme « aralkylène » désigne un groupe aklylène portant un substituent d'aryle. Le terme « alkaryle » désigne un groupe aryle portant un substituent d'alkyle, et le terme « alkarylène » désigne un groupe arylène portant un susbtituent alkyle.
Les termes « alkyllithium », « alkylsodium » et « alkylpotassium » désignent des composés constitués respectivement d'un élément lithium, sodium ou potassium, lié à un groupe alkyle, tel que méthyl, éthyl, propyl, butyl ou hexyl. Par exemple, l'alkyllithium peut être un butyllithium, tel que le n-butyllithium, t-butyllithium ou sec-butyllithium.
Les termes « aryllithium », « arylsodium » et « arylpotassium » désignent respectivement un élément lithium, sodium ou potassium relié à un groupement aromatique comportant un anneau aromatique ou plusieurs anneaux aromatique condensés ou reliés entre eux par une liaison covalente ou par l'intermédiaire d'un groupe commun tel qu'un reste de méthylène ou éthylène.
Le terme « réactif de Grignard » désigne un composé de type R-Mg-X dans lequel X est Cl ou Br, et R est un reste organique, notamment un reste alkyle, cycloalkyle ou aryle.
Le terme « borate de trialkyle » désigne un composé de type $B(OR_{10})(OR_{11})(OR_{12})$ dans lequel $R_{10}$, $R_{11}$ et $R_{12}$ représentent des restes alkyle, identiques ou différents. Le représentant le plus simple des borates de trialkyle est le borate de triméthyle $B(OCH_3)_3$.
Un réacteur continu de type piston (appelé aussi réacteur à écoulement piston) est un réacteur de longueur L et de volume V dans lequel le débit volumique total F est uniforme et constant, et le temps de séjour

$$\tau = V/F \qquad \text{(Equation 1)}$$

est constant pour toutes les molécules entrant dans le réacteur à un endroit donné. Le réacteur piston possède un profil de température et de concentration qui peuvent varier le long de son axe. Un tel réacteur peut être modélisé comme une suite de réacteurs élémentaires disposés en série le long d'un axe et ayant chacun une longueur $\Delta L$ et un volume $\Delta V$. Ce type de réacteur est connu en tant que tel (voir par exemple l'article « Intensification principle of a new three-phase catalytic slurry reactor. Part I : Performance caracterisation » par S. Machefer et al., paru dans la revue Chemical Engineering and Processing 70 (2013), 277-288).

**2. Description détaillée**

Nous décrivons ici en détail le procédé selon l'invention. De manière typique, ce procédé comprend trois étapes réactionnelles distinctes :

(i) une étape de métallation entre un composé organique aliphatique, acyclique ou cyclique, ou un composé organique aromatique, avec un agent de métallation, notamment un alkyllithium, alkylsodium ou alkylpotassium ou un réactif de Grignard, pour former un intermédiaire réactionnel ;
(ii) une étape réactionnelle entre un borate de trialkyle et ledit intermédiaire réactionnel pour former un ester d'acide

boronique ;
(iii) une étape d'hydrolyse de l'ester d'acide boronique pour former un acide boronique.

Selon l'invention, ces trois étapes distinctes sont mises en oeuvre dans un procédé continu. Plus particulièrement, elles sont mises en oeuvre dans un système comprenant deux réacteurs tubulaires de type piston à agitation horizontale mis en série. La première étape (i) est réalisée dans le premier réacteur ; les étapes (ii) et (iii) sont réalisées dans le second réacteur. Une caractéristique essentielle du procédé selon l'invention est que l'étape (iii) d'hydrolyse de l'ester d'acide boronique peut être réalisée :

- soit directement dans le second réacteur par injection (de préférence à un débit constant) d'une solution aqueuse comprenant éventuellement un hydracide halogéné, en aval de l'entrée du milieu réactionnel en provenance de la sortie du premier réacteur dans le second réacteur (par exemple à environ mi-parcours du mélange réactionnel dans le second réacteur) ;
- soit en sortie du second réacteur, par injection à un débit constant d'une solution aqueuse comprenant éventuellement un hydracide halogéné dans le milieu réactionnel.

L'étape (i) de formation de l'intermédiaire réactionnel est réalisée dans un premier réacteur tubulaire de type piston. Plus particulièrement :

- on fait entrer, de préférence de manière continue et séparée, de préférence à une extrémité du premier réacteur, au moins une solution comprenant un composé organique aliphatique, acyclique ou cyclique, ou un composé organique aromatique, éventuellement dans un solvant approprié ; et au moins une solution comprenant un agent de métallation, éventuellement dans un solvant approprié ; lesdites au moins une solution formant un premier mélange réactionnel ;
- on soumet ledit premier mélange réactionnel à une agitation mécanique axiale ;
- on sort ledit premier mélange réactionnel du premier réacteur.

Dans un mode de réalisation selon l'invention, la température du premier mélange réactionnel en sortie du premier réacteur est comprise entre -20°C et 35°C, de préférence entre 0°C et 35°C, et plus préférentiellement entre 0°C et 20°C. En raison de la sensibilité à l'humidité et à l'oxygène des réactifs et des intermédiaires organométalliques, la réaction est mise en oeuvre sous une atmosphère de gaz inerte sec, tel que l'azote ou l'argon.

Dans un mode de réalisation pouvant être combiné avec le précédent, le temps de passage du premier milieu réactionnel dans le premier réacteur est compris entre 5 secondes et 120 secondes, de préférence 15 secondes et 45 secondes, et encore plus préférentiellement entre 10 secondes et 30 secondes.

Avantageusement, on peut envisager en tant qu'agents de métallation, par exemple, les composés de Grignard, les alkyllithium, les alkylpotassium ou les alkylsodium. On préfère en tant que réactifs de métallation en particulier les alkyllithium primaires ou secondaires, tels que le n-buthyllithium, le n-hexyllithium ou le cyclohexyllithium, et les dialkylamides de lithium, les dialkylamides de potassium, ou les dialkylamides de sodium,, en particulier le diisopropylamidure de lithium, le diisopropylamidure de potassium, le diisopropylamidure de sodium. L'étape de métallation est mise en oeuvre dans un solvant ou un mélange de solvants approprié.

L'étape (i) du procédé selon l'invention peut être mise en oeuvre dans un solvant organique ou un mélange de solvants, de préférence dans des solvants aliphatiques, aromatiques ou des éthers ou de mélanges de ces solvants, de manière particulièrement préférée dans des solvants ou mélanges de solvants qui renferment au moins un solvant pris dans le groupe suivant : le tétrahydrofurane, les éthers inférieurs, le glyme, le diglyme, le toluène, le cyclohexane, le pentane, l'hexane, l'isohexane, l'heptane, le tréthylamine, les éthers dialkyliques, en particulier l'éther diéthylique, l'éther di-n-propylique, l'éther diisopropylique, l'éther dibutylique, le 2-méthyl-tétrahydrofurane, l'éther ter-butylméthylique, le benzène, le xylène, l'anisol, l'éther de pétrole (mélange d'alcanes), le méthylcyclohexane.

Les étapes (ii) de formation de l'ester d'acide boronique et (iii) de formation de l'acide boronique sont réalisées dans le second réacteur tubulaire de type piston. Plus particulièrement :

- on fait entrer, de préférence de manière continue et séparée, de préférence à une extrémité du second réacteur, au moins une solution comprenant l'intermédiaire réactionnel, éventuellement dans un solvant approprié, et au moins une solution comprenant un borate de trialkyle, éventuellement dans un solvant approprié, lesdites au moins une solution formant le second mélange réactionnel ;
- on soumet ledit second mélange réactionnel à une agitation mécanique axiale ;
- on injecte, de manière continue, en aval de l'entrée du milieu réactionnel en provenance de la sortie du premier réacteur dans le second réacteur (par exemple à environ mi-parcours du mélange réactionnel dans le second réacteur ou en sortie du second réacteur), une solution aqueuse comprenant éventuellement un hydracide halogéné,

pour hydrolyser le second mélange réactionnel.

Dans un mode de réalisation, la température du second mélange réactionnel en sortie du second réacteur est avantageusement comprise entre 15°C et 35°C, préférentiellement entre 17°C et 30°C, et encore plus préférentiellement entre 18°C et 25°C.

Dans un mode de réalisation pouvant être combiné avec les précédents, le temps de passage du second milieu réactionnel dans le second réacteur est compris entre 5 secondes et 60 secondes, de préférence 10 secondes et 30 secondes, et encore plus préférentiellement entre 10 secondes et 20 secondes.

De manière avantageuse, en raison de la sensibilité à l'humidité et à l'oxygène de l'intermédiaire réactionnel, la réaction est mise en oeuvre sous une atmosphère de gaz inerte sec, tel que l'azote ou l'argon.

Les étapes (ii) du procédé selon l'invention est mise en oeuvre dans un solvant organique ou un mélange de solvants, de préférence dans des solvants aliphatiques, aromatiques ou des éthers ou de mélanges de ces solvants, de manière particulièrement préférée dans des solvants ou mélanges de solvants qui renferment au moins un solvant pris dans le groupe suivant : le tétrahydrofurane, les éthers inférieurs, le glyme, le diglyme, le toluène, le cyclohexane, le pentane, l'hexane, l'isohexane, l'heptane, le tréthylamine, les éthers dialkyliques, en particulier l'éther diéthylique, l'éther di-n-propylique, l'éther diisopropylique, l'éther dibutylique, le 2-méthyl-tétrahydrofurane, l'éther ter-butylméthylique, le benzène, le xylène, l'anisol, l'éther de pétrole (mélange d'alcanes), le méthylcyclohexane.

Le borate de trialkyle peut être un composé de type $B(OR_{10})(OR_{11})(OR_{12})$ dans lequel $R_{10}$, $R_{11}$ et $R_{12}$ représentent des restes alkyle, identiques ou différents. Avantageusement on utilise du borate de triméthyle.

Comme indiqué ci-dessus, le procédé selon l'invention permet de préparer notamment :

- des acides boroniques cycliques de type $R\text{-}B(OH)_2$ répondant aux formules (I), (II) ou (III) où R est un reste aryle ou cyclohexyle ;
- des acides boroniques hétérocycliques de type $R\text{-}B(OH)_2$ répondant aux formules (IV), (V) ou (VI) où R est un reste hétérocyclique ;
- des acides boroniques cycliques de type $R\text{-}B(OH)_2$ répondant aux formules (X) ou (XI), dans lesquelles R représente un anneau hétéroaromatique formé de cinq atomes, dont deux ou trois hétéroatomes, possiblement condensé ;
- des acides boroniques cycliques de type $R\text{-}B(OH)_2$ dans lesquels R est un cycloalkane, substitué ou non ; et
- des acides boroniques aliphatiques acycliques.

Le procédé selon l'invention est exécuté dans un système comprenant deux réacteurs continus de type réacteur piston (appelé aussi réacteur à écoulement piston) placés en série. Les réacteurs ont de préférence une forme cylindrique.

Les réacteurs doivent être pourvus d'un moyen d'agitation axiale, qui est de préférence un moyen mécanique d'agitation axiale. On entend ici par moyen d'agitation axiale tout dispositif qui assure une agitation du mélange réactionnel sur toute la longueur, ou partie significative de celle-ci, par un moyen possédant un axe parallèle à l'axe des réacteurs. Ce moyen d'agitation axiale facilite, d'une part, le déroulement de la réaction en mélangeant les espèces chimiques entrant dans les réacteurs, en mélangeant les espèces chimiques entre elles et facilite d'autre part le transfert thermique. Différents moyens sont utilisables à cette fin, tels qu'une suite de malaxeurs, une vis sans fin, une hélice, mais ce moyen mécanique d'agitation axiale ne doit pas perturber le caractère « piston » des réacteurs, tel que défini par l'équation (1) donnée ci-dessus.

Comme indiqué ci-dessus, les réacteurs piston possèdent un profil de température et de concentration qui peuvent varier le long de son axe. Si l'on réalise une réaction très exothermique dans un réacteur piston, le transfert radial de chaleur peut devenir limitant. Pour exécuter le procédé selon l'invention, les réacteurs piston doivent donc être refroidis par un moyen approprié. Avantageusement, le réacteur est à double paroi, un fluide de transfert thermique circulant entre les deux parois pour refroidir le milieu réactionnel. De manière surprenante, la demanderesse a constaté qu'il n'est nullement nécessaire de refroidir le milieu réactionnel aux températures habituelles pour ce type de réaction, à savoir entre -50°C et -100°C. En effet, le procédé selon l'invention peut se dérouler sans risque à une température plus élevée, typiquement comprise entre 15°C et 35°C, de préférence comprise entre 17°C et 30°C, et plus préférentiellement entre 18°C et 25°C, ce qui implique d'utiliser un fluide de transfert thermique à une température un peu plus basse, par exemple -5°C à -20°C. Cela dépend évidemment du caractère exotherme des réactions, des débits du mélange réactionnel et du fluide de transfert thermique, et de la concentration du milieu réactionnel, et l'homme du métier, une fois guidé vers des températures de cet ordre de grandeur, pourra facilement ajuster la température du milieu réactionnel, i.e. de la quantité de solvant qui absorbe l'enthalpie de réaction, en modifiant la température et le débit du fluide de transfert thermique de manière à obtenir un rendement optimal en acide boronique cyclique.

En ce qui concerne le dimensionnement du réacteur piston, avantageusement, le diamètre intérieur des premier et second réacteurs est compris entre 20 mm et 100 mm. Au-dessus de 100 mm, la productivité du réacteur diminue car pour que la surface d'échange reste importante, il faut diminuer le débit. Au-dessous de 20 mm, le rapport surface / volume est très important, mais le débit est insuffisant pour une production industrielle. De manière préférée, le diamètre

intérieur des réacteurs piston est compris entre 30 mm et 75 mm, et de manière encore plus préférée entre 40 mm et 60 mm. La longueur de la chambre de réaction des réacteurs est comprise entre 10 cm et 100 cm. Au-dessous de 10 cm, le temps de séjour est trop court. Au-dessus de 100 cm, l'usinage des réacteurs tubulaires devient difficile, et l'agitation du mélange réactionnel est difficile à accomplir. Une longueur préférée se situe entre 20 cm et 80 cm.

Le procédé selon l'invention permet de produire des quantités industrielles d'acide boronique cyclique, par exemple de l'ordre de 5 kg/h à 200 kg/h dans le cas des acides 2-hydroxyphenylboronique. Cela permet d'accéder à une production annuelle de l'ordre de 100 tonnes. Pour un système de deux réacteurs continus mis en série, cela représente une productivité tout à fait intéressante sur le plan industriel, même dans le cas de molécules simples. Le coût d'investissement d'un système capable de mettre en oeuvre le procédé selon l'invention est plus faible que celui pour un réacteur de type batch, et le besoin en main d'oeuvre est réduit. Pour accroître la productivité, on peut augmenter le diamètre du réacteur, mais cette possibilité est limitée par le transfert de chaleur. Avantageusement, on utilise une pluralité de réacteurs, compte tenu de leur simplicité, du caractère continu du procédé et du fait que ce procédé continu ne nécessite pas l'intervention de beaucoup de main d'oeuvre.

Un autre avantage du procédé selon l'invention est lié au fait que par rapport à un réacteur de type « batch », le volume du mélange réactionnel, et par conséquent la quantité de produits chimiques potentiellement dangereux présents dans le réacteur, est beaucoup plus faible dans un réacteur continu de type piston.

3. Exemples

L'invention est illustrée ci-dessus par quatre exemples (exemples 2, 3 ; 4 ; 5 et 6) qui cependant ne limitent aucunement l'invention. Les exemples 1, 2 et 3 portent sur la préparation d'un acide boronique cyclique, plus particulièrement l'acide 2-hydroxyphenylboronique, appelé aussi acide 2-hydroxybenzeneboronique (n°CAS : 89466-08-0) ; l'exemple 1 décrivant la préparation de cette même molécule (acide 2-hydroxybenzeneboronique) par un procédé de type « batch », selon l'état de la technique. Les exemples 2 et 3 décrivent deux variantes du même procédé selon l'invention conduisant à la même molécule cible.

L'exemple 4 présente le procédé de préparation de l'acide 4-terbutyl phénylboronique, appelé aussi acide 4-terbutyl phénylboronique (n°CAS 123324-71-0). L'exemple 5 porte sur la préparation d'un autre acide boronique : l'acide butyl boronique (n°CAS : 4426-47-5).

L'exemple 6 mentionne d'autres molécules obtenues par le procédé selon l'invention.

Exemple 1 (préparation d'un acide boronique dans un réacteur de type « batch »)

Une solution de n-butyllithium (1,7 M dans l'hexane) à température ambiante a été ajoutée progressivement dans une solution de 2-bromophénol à une température de - 90°C (dans l'éther). Le mélange a été agité et réchauffé jusqu'à température ambiante pendant 2 heures sous atmosphère inerte ($N_2$). Le mélange a ensuite été refroidi à -90°C. Une solution de triméthyle borate a été ajoutée rapidement dans ce mélange. Le mélange a été agitée à -90°C pendant 30 minutes, puis à température ambiante pendant 15 heures sous atmosphère inerte ($N_2$). Une solution aqueuse d'acide chlorhydrique 2M a été ajoutée progressivement dans le mélange réactionnel à une température comprise entre - 10°C et 0°C. Le mélange a ensuite été agité pendant encore 30 minutes. La phase aqueuse a été récupérée par extraction en utilisant de l'éther. La phase organique a été récupérée puis a été séchée en utilisant du sulfate de magnésium anhydre ($MgSO_4$). Le solvant a été éliminé dans un évaporateur rotatif. Le résidu solide récupéré a été recristallisé dans une solution éther/hexane (3:7) pour obtenir un solide blanc (l'acide 2-hydroxybenzeneboronique).

Exemple 2 (procédé selon l'invention)

Dans cet exemple, deux réacteurs continus (Raptor®) en série ont été utilisés.

On a injecté dans le premier réacteur une solution de n-hexyllithium (dans l'hexane, dans une fraction massique de 33%) avec un débit constant de 9,4 litres/heures en même temps qu'une solution de 2-bromophénol (dans le toluène dans une fraction massique de 50%) avec un débit constant de 3,5 litres/heures. Les deux liquides ont été injectés dans le réacteur à température ambiante. La température de l'enveloppe externe du réacteur était fixée à 0°C.

En sortie du premier réacteur, la température du mélange réactionnel était comprise entre 19,6°C et 20,8°C, la pression relative était comprise entre 0,1 bar et 0,3 bar. Le mélange réactionnel a été ensuite injecté dans un second réacteur en même temps qu'une solution de borate de triméthyle (dans le toluène dans une fraction massique de 50%) avec un débit constant de 2,7 litres/heures. La température de l'enveloppe externe du réacteur était fixée à -18°C. Une solution aqueuse d'acide chlorhydrique (dans une fraction massique de 8%) a été injectée directement dans le second réacteur (à mi-parcours du mélange réactionnel dans le second réacteur) avec un débit constant de 4,9 litres/heures. La température du mélange réactionnel en sortie du second réacteur était comprise entre 3°C et 16°C, la pression relative était comprise entre 0,1 bar et 0,3 bar.

Le temps de séjour total du mélange réactionnel dans les deux réacteurs continus était d'une minute environ (réacteur 1 + réacteur 2).

Le mélange réactionnel a ensuite été récupéré dans une cuve, puis l'acide borique (solide blanc) a été filtré. Le filtrat a ensuite été décanté, puis la phase aqueuse a été acidifiée avec une solution aqueuse d'acide chlorhydrique (16% massiques) jusqu'à l'obtention d'un pH compris entre 4 et 5. Le 2-bromophénol non réagi a été éliminé par décantation. Le filtrat a ensuite été acidifié à un pH compris entre 1 et 2 jusqu'à précipitation de l'acide 2-hydroxyphenylboronique (solide blanc). Le solide blanc a été récupéré par filtration et caractérisé par spectromètre de masse avec ionisation par électronébulisation (M- ; pic à 137,09) et par spectroscopie infrarouge (Pics principaux [en $cm^{-1}$] : 3366; 3332; 1613; 1454; 1335; 1320; 1216; 1132; 760; 740) ; et on a trouvé que ses caractéristiques étaient identiques à celles d'un échantillon de référence.

<u>Exemple 3 (procédé selon l'invention)</u>

Dans cet exemple, deux réacteurs continus (Raptor®) en série ont été utilisés. Par rapport à l'exemple 2, l'étape d'hydrolyse de l'ester d'acide boronique a été effectuée en sortie du second réacteur.

On a injecté dans le premier réacteur une solution de n-hexyllithium (dans l'hexane, dans une fraction massique de 33%) avec un débit constant de 127 grammes/minute en même temps qu'une solution de 2-bromophénol (dans le méthyl tert-butyl éther, dans une fraction massique de 25%) avec un débit constant de 130 grammes/minute. Les deux solutions ont été injectées dans le réacteur à température ambiante et de manière séparée. La température de l'enveloppe externe du réacteur était comprise entre -7°C et -5°C.

En sortie du premier réacteur, la température du mélange réactionnel était comprise entre 12°C et 15°C, la pression relative était comprise entre 0,1 bar et 0,3 bar. Le temps de passage du premier mélange réactionnel dans le premier réacteur était compris entre 20 secondes et 25 secondes.

L'intermédiaire réactionnel ainsi obtenu a ensuite été injecté dans un second réacteur en même temps qu'une solution de borate de triméthyle (dans le méthyl tert-butyl éther, dans une fraction massique de 50%) avec un débit constant de 80 grammes/minute. La température de l'enveloppe externe du réacteur était comprise entre -6°C et -5°C. Le temps de passage du second mélange réactionnel dans le second réacteur était d'environ 12 secondes.

Une solution aqueuse a été injectée en sortie du second réacteur avec un débit constant de 141 grammes/minutes. La température du second mélange réactionnel en sortie du second réacteur était comprise entre 22°C et 23°C, la pression relative était comprise entre 0,1 bar et 0,3 bar. Ce dernier a ensuite été récupéré dans une cuve, puis a été acidifié avec une solution aqueuse d'acide chlorhydrique (à température ambiante). La phase aqueuse a été écartée. La phase organique a ensuite été concentrée sous vide, à une température inférieure à 50°C, pour éliminer le mélange de solvants. Le concentrat obtenu a été refroidi à une température comprise entre 0°C et 5°C. Le solide obtenu a été filtré, lavé par de l'hexane et séché sur fritté, et a été caractérisé par spectromètre de masse avec ionisation par électronébulisation (M-, pic à 137,09) et spectroscopie infrarouge (Pics principaux [en $cm^{-1}$] : 3366; 3332; 1613; 1454; 1335; 1320; 1216; 1132; 760; 740) ; ses caractéristiques étaient identiques à celles d'un échantillon de référence.

<u>Exemple 4 (procédé selon l'invention)</u>

Dans cet exemple, deux réacteurs continus (Raptor®) en série ont été utilisés.

On a injecté dans le premier réacteur une solution de n-butyl lithium (dans l'heptane, dans une fraction massique de 29%) avec un débit constant de 6,1 litres/heures en même temps qu'une solution de 4-terbutyl bromobenzene (dans le THF dans une fraction massique de 50%) avec un débit constant de 7,7 litres/heures. Les deux liquides ont été injectés dans le réacteur à température ambiante. La température de l'enveloppe externe du réacteur a été maintenue à une température comprise entre -27°C et -24°C.

En sortie du premier réacteur, la température du mélange réactionnel était comprise entre -12°C et -15°C, la pression relative était $\leq$ 0.5bar (c'est-à-dire quasiment à pression atmosphérique). Le mélange réactionnel, issu du premier réacteur, a été injecté dans un second réacteur en même temps qu'une solution de borate de triméthyle (dans le terbutyl methyl ether dans une fraction massique de 25%) avec un débit constant de 9,8 litres/heures. La température de l'enveloppe externe du réacteur a été maintenue à une température comprise entre -19°C et -16°C. Une solution aqueuse d'acide chlorhydrique (dans une fraction massique de 16%) a été injectée directement dans le second réacteur (en fin de parcours du mélange réactionnel dans le second réacteur) avec un débit constant de 4,5 litres/heures. La température du mélange réactionnel en sortie du second réacteur était comprise entre 14°C et 18°C, la pression relative était $\leq$ 0.5bar.

Le temps de séjour total du mélange réactionnel dans les deux réacteurs continus était d'une minute environ (réacteur 1 + réacteur 2).

Le mélange réactionnel a ensuite été récupéré dans une cuve, puis l'acide borique (solide blanc) a été éliminé par filtration. Le filtrat a ensuite été décanté, puis la phase aqueuse a été écartée. Après ajout d'eau sur la phase

organique, on a additionné une solution aqueuse d'hydroxyde de sodium (30% massiques) jusqu'à l'obtention d'un pH compris entre 12 et 14. Le milieu biphasique a ensuite été décanté. La phase organique a été écartée et la phase aqueuse a été acidifiée à l'aide d'une solution d'acide chlorhydrique à 32% massique jusqu'à l'obtention d'un pH compris entre 1 et 2 permettant la précipitation de l'acide 4-terbutyl phénylboronique (solide blanc). Le solide blanc a été récupéré par filtration et caractérisé par HPLC (purity = 96,4 area%) et par RMN ($^{1}H$, $^{13}C$ et $^{11}B$) ; et on a trouvé que ses caractéristiques étaient identiques à celles d'un échantillon de référence.

Exemple 5 (procédé selon l'invention)

Dans cet exemple, deux réacteurs continus (Raptor®) en série ont été utilisés.

On a injecté dans le premier réacteur une solution de n-butyl lithium (dans l'heptane, dans une fraction massique de 29%) avec un débit constant de 4,2 litres/heures en même temps qu'une solution de borate de triméthyle (dans le terbutyl methyl ether dans une fraction massique de 25%) avec un débit constant de 10,1 litres/heures. La température des enveloppes externes des réacteurs était à environ -2°C. La température du mélange réactionnel en sortie du premier réacteur était comprise entre 4°C et 5°C, la pression relative était $\leq$ 0.5bar (on était à Patm).

Le mélange réactionnel a été ensuite injecté dans le second réacteur en même temps qu'une solution aqueuse d'acide chlorhydrique (dans une fraction massique de 6,4%) avec un débit constant de 7,9 litres/heures.

La température du mélange réactionnel en sortie du réacteur était comprise entre 14°C et 18°C, la pression relative était $\leq$ 0.5bar.

Le temps de séjour total du mélange réactionnel dans les réacteurs continus était de 40 secondes environ.

Le mélange réactionnel a ensuite été récupéré dans une cuve, puis l'acide borique (solide blanc) a été éliminé par filtration. Le filtrat a ensuite été décanté, puis la phase aqueuse a été écartée. Après ajout d'eau sur la phase organique, on a additionné une solution aqueuse d'hydroxyde de sodium (30% massiques) jusqu'à l'obtention d'un pH compris entre 12 et 14. Le milieu biphasique a ensuite été décanté. La phase organique a été écartée et la phase aqueuse a été acidifiée à l'aide d'une solution d'acide chlorhydrique à 32% massique jusqu'à l'obtention d'un pH compris entre 1 et 2 permettant la précipitation de l'acide n-butyl boronique (solide blanc). Le solide blanc a été récupéré par filtration et caractérisé par CCM, IR et par RMN ($^{1}H$, $^{13}C$ et $^{11}B$); et on a trouvé que ses caractéristiques étaient identiques à celles d'un échantillon de référence.

Exemple 6

Selon un mode opératoire similaire à celui des exemples 2 et 3, on a synthétisé les trois molécules suivantes : l'acide 4-methoxyphenylboronique (CAS : 5720-07-0), l'acide 3-thienylboronique (CAS : 6165-69-1) et l'acide 4-pyridinylboronique (CAS : 1692-15-5).

## Revendications

**1.** Procédé continu de préparation d'un acide boronique de type R-B$(OH)_2$ dans lequel R représente un reste aliphatique, acyclique ou cyclique, ou un reste aromatique, par action d'un borate de trialkyle sur un agent de métallation de type R-M (avec M = Li, Na ou K) ou un réactif de type Grignard de type R-Mg-X (où X est le chlore ou le brome), ledit procédé étant exécuté dans un système comprenant un premier réacteur piston et un second réacteur piston, mis en série, les deux réacteurs piston étant de préférence de forme cylindrique, lesdits réacteurs pistons étant pourvus d'un moyen mécanique d'agitation axiale, et dans lequel procédé :

- on prépare dans le premier réacteur piston un intermédiaire réactionnel R-M ou R-Mg-X par réaction de métallation entre une solution comprenant au moins un composé porteur du reste cyclique R, notamment un composé aliphatique, acyclique ou cyclique, ou un composé aromatique, et un agent de métallation ;
- on fait entrer, de préférence de manière continue et séparée, de préférence à une extrémité du second réacteur, au moins une solution comprenant ledit intermédiaire réactionnel R-M ou R-Mg-X et au moins une solution comprenant un borate de trialkyle ; et on soumet le mélange réactionnel contenu dans le second réacteur à une agitation mécanique axiale ;
- on injecte dans le second réacteur, de manière continue, en aval de l'entrée du milieu réactionnel en provenance de la sortie du premier réacteur (par exemple à environ mi-parcours du mélange réactionnel dans le second réacteur ou en sortie du second réacteur), une solution aqueuse comprenant éventuellement un acide, tel qu'un acide minéral, et de préférence un hydracide halogéné, pour hydrolyser le mélange réactionnel et obtenir ledit acide boronique cyclique R-B$(OH)_2$.

2. Procédé selon la revendication 1, **caractérisé en ce que** la température du mélange réactionnel en sortie du second réacteur est avantageusement comprise entre 15°C et 35°C, préférentiellement entre 17°C et 30°C, et encore plus préférentiellement entre 18°C et 25°C.

3. Procédé selon la revendication 1 ou 2, **caractérisé en ce que** le temps de passage du mélange réactionnel dans le second réacteur est compris entre 5 secondes et 60 secondes, de préférence 10 secondes et 30 secondes, plus préférentiellement 10 secondes et 20 secondes.

4. Procédé selon l'une quelconque des revendications 1 à 3, **caractérisé en ce que** pour la préparation de l'intermédiaire réactionnel dans le premier réacteur :

   - on fait entrer, de préférence de manière continue et séparée, de préférence à une extrémité du premier réacteur, au moins une solution comprenant un composé organique aliphatique, acyclique ou cyclique, ou un composé organique aromatique, et au moins une solution comprenant un agent de métallisation, lesdites au moins une solution formant un premier mélange réactionnel ;
   - on soumet le mélange réactionnel contenu dans le premier réacteur réactionnel à une agitation mécanique axiale ;
   - on sort ledit mélange réactionnel du premier réacteur.

5. Procédé selon l'une quelconque des revendications 1 à 4, **caractérisé en ce que** la température du mélange réactionnel en sortie du premier réacteur est comprise entre -20°C et 35°C, de préférence entre 0°C et 35°C, et plus préférentiellement entre 0°C et 20°C.

6. Procédé selon l'une quelconque des revendications 1 à 5, **caractérisé en ce que** le temps de passage dudit mélange réactionnel dans le premier réacteur est compris entre 5 secondes et 120 secondes, de préférence 15 secondes et 45 secondes, plus préférentiellement entre 10 secondes et 30 secondes.

7. Procédé selon l'une quelconque des revendications 1 à 6, **caractérisé en ce que** les agents de métallation sont choisis parmi les composés de Grignard, les alkyllithium ou les dialkylamides de lithium, les alkylpotassium ou les dialkylamides de potassium, ou les alkylsodium ou les dialkylamides de sodium, et sont de préférence choisis parmi les alkyllithium primaires ou secondaires, tels que le n-buthyllithium, le n-hexyllithium ou le cyclohexyllithium.

8. Procédé selon l'une quelconque des revendications 1 à 7, **caractérisé en ce que** le reste R est sélectionné dans le groupe formé par :

   les restes alkyle substitués ou non ; les restes cycloalkyle (notamment cyclohexyle, cycloheptyle, cyclooctyle, cyclononyle, cyclodécyle) substitués ou
   non ; les restes aliphatiques insaturés ; les restes aromatiques, possiblement condensés (notamment phényle, naphthyle, phénanthryle, anthracyle, les dérivés de chrysène, pyrène, tétracène, fluoranthène, coronène, benz[a]anthracène), substitués ou non ; les restes hétérocycliques aliphatiques, substitués ou non ; les restes hétérocycliques aromatiques, possiblement condensés, substitués ou non tels que les restes du furane, substitués ou non (possiblement condensés avec un ou plusieurs anneaux benzéniques, en particulier le benzofurane et
   l'isobenzofurane) et les restes du pyrrole, substitués ou non (possiblement condensés avec un ou plusieurs anneaux benzéniques, en particulier l'indole et
   l'isoindole) et les restes du thiophène, substitués ou non (possiblement condensés avec un ou plusieurs anneaux benzéniques, en particulier le benzothiophène et le benzo[c]thiophène) et les restes de l'indazole, pyrazole, oxazole, isoxazole, thiazole, substitués ou non.

9. Procédé selon l'une quelconque des revendications 1 à 8, **caractérisé en ce que** le reste R représente un reste hétérocyclique ou hétéroaromatique formé de six atomes et un, deux ou trois hétéroatomes, ces derniers pouvant notamment être l'oxygène, l'azote et le soufre comme indiqué sur les formules (IV), (V) et (VI) ci-dessous :

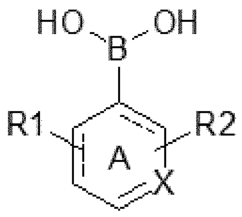

(IV)

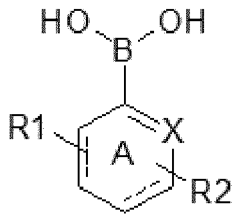

(V)

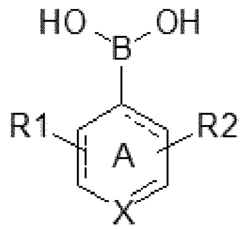

(VI)

dans lesquelles l'hétérocycle A est aromatique ou non, étant entendu que lorsque l'hétérocycle est aromatique alors X représente un atome d'azote, et lorsque l'hétérocycle A n'est pas aromatique, alors X = N, O ou S, étant entendu que lorsque X représente un atome d'azote, ce dernier est lié par une double liaison avec l'un de des carbones voisins, ou s'il n'est pas lié par une double liaison, porte un reste monovalent, le groupe boronique peut être en position 2, 3, 4 ou 5 ,
et dans lesquelles R1 et R2 symbolisent pour chaque espèce une substitution, qui peut être une mono-substitution, une bi-substitution ou une polysubstitution, avec un, deux ou plusieurs restes identiques ou différents, étant entendu que la substitution peut avoir lieu en position 2, 3, 4 et/ou 5, à l'exception de la position à laquelle se trouve le groupe boronique.

**10.** Procédé selon l'une quelconque des revendications 1 à 8, **caractérisé en ce que** le reste R représente un anneau hétéroaromatique formé de cinq atomes (dont un ou deux atomes hétéro) condensé avec un ou plusieurs anneaux benzéniques comme représenté en formule (XVI) :

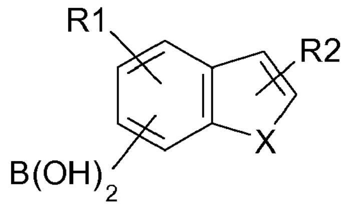

X = N, S, O

(XVI)

étant entendu que le groupe boronique peut être en position 2, 3, 5, 6 ou 7,
et étant entendu que les restes R1 et R2 symbolisent pour chaque espèce une substitution, qui peut être une mono-substitution, une bi-substitution ou une polysubstitution, avec un, deux ou plusieurs restes identiques ou différents, la substitution peut avoir lieu en position 2, 3, 5, 6 et/ou 7, à l'exception de la position à laquelle se trouve le groupe boronique ; et
étant entendu que lorsque X=N, alors l'atome d'azote est relié à un atome d'hydrogène ou éventuellement à un substituant, en particulier un substituant alkyle.

**11.** Procédé selon l'une quelconque des revendications 1 à 8, **caractérisé en ce que** le reste R représente un reste cyclique comme représenté en formules (I), (II) ou (III) :

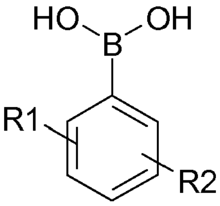

(I)

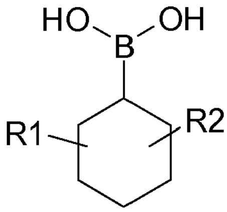

(II)

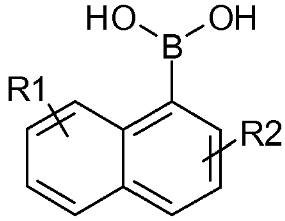

(III)

où le reste R représente un alkyle substitué ou non, un phényle substitué ou non, ou un cyclohexane substitué ou non, ou un naphthyle substitué ou non, ou un phénanthryle substitué ou non, ou un anthracyle substitué ou non, ou un autre reste aromatique condensé (par exemple chrysène, pyrène, tétracène, fluoranthène, coronène, benz[a] anthracène), substitué ou non ; et étant entendu que les restes R1 et R2 symbolisent pour chaque espèce une substitution, qui peut être une mono-substitution, une bi-substitution ou une polysubstitution, avec un, deux ou plusieurs restes identiques ou différents.

**12.** Procédé selon l'une quelconque des revendications 1 à 8, **caractérisé en ce que** le reste R représente un anneau hétéroaromatique formé de deux atomes d'azote, comme représenté en formules (VII), (VIII) et (IX) :

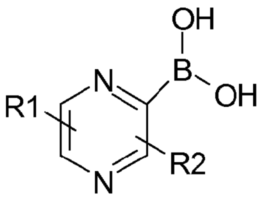

(VII)

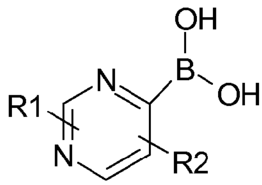

(VIII)

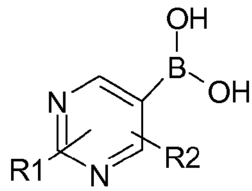

(IX)

étant entendu que les restes R1 et R2 symbolisent pour chaque espèce une substitution, qui peut être une mono-substitution, une bi-substitution ou une polysubstitution, avec un, deux ou plusieurs restes identiques ou différents, étant entendu que la substitution peut avoir lieu en position 2, 3, 4 et/ou 5, à l'exception de la position à laquelle se trouve le groupe boronique.

**13.** Procédé selon l'une quelconque des revendications 1 à 8, **caractérisé en ce que** le reste R représente un anneau hétéroaromatique formé de cinq atomes, et en particulier les anneaux hétéroaromatiques comprenant quatre atomes de carbone et un hétéroatome, ce dernier pouvant être en particulier l'azote, le soufre ou l'oxygène, comme représenté en formules (X) et (XI) :

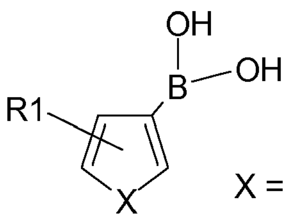

X = N ; S ; O

(X)

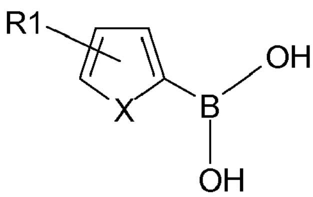

X = N ; S ; O

(XI)

étant entendu que le reste R peut être un furane, un pyrrol ou un thiophène, et étant entendu que les restes R1 symbolisent une substitution, qui peut être une mono-substitution, une bi-substitution ou une polysubstitution, avec un, deux ou plusieurs restes identiques ou différents ; cette substitution pouvant avoir lieu en position 1, 2, 3 et/ou 4 (à l'exception de la position à laquelle se trouve le groupe boronique) :

étant entendu que lorsque X=N, alors l'atome d'azote est relié à un atome d'hydrogène ou éventuellement à un substituant ; et sachant que les restes de furanes, pyrrol et thiophène peuvent être condensés avec un ou plusieurs anneaux benzéniques, substitué ou non, cette substitution pouvant être faite par un ou plusieurs restes identiques ou différents ; et sachant que, de préférence, les restes furane sont sélectionnés parmi le benzofurane et l'isobenzofurane, que les restes pyrrole sont sélectionnés parmi l'indole et l'isoindole, et que les restes thiophène sont sélectionnés parmi le benzothiophène et le benzo[c]thiophène.

**14.** Procédé selon l'une quelconque des revendications 1 à 8, **caractérisé en ce que** le reste R représente un anneau hétéroaromatique formé de cinq atomes avec un ou deux hétéroatomes, comme représenté en formules (XII) à (XV) ;

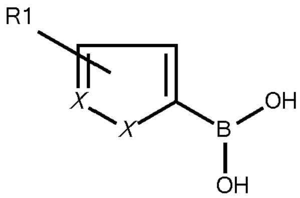

X = N, S, O

(XII)

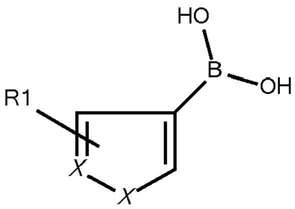

X = N ; S ; O

(XIII)

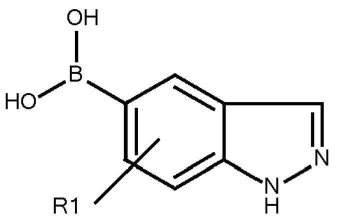

(XIV)

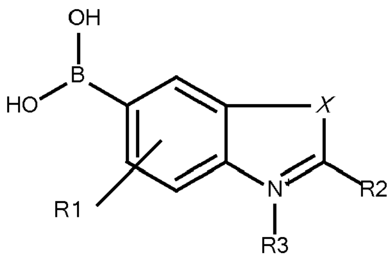

X = S,N,O, C

(XV)

étant entendu que le reste R peut représenter un indazole, un pyrazole, un oxazole, un isoxazole, un thiazole ou un anneau hétéroaromatique formé de cinq atomes (dont un ou deux atomes hétéro) condensé avec un ou plusieurs anneaux benzéniques, comme représenté en formules (XIV) et (XV),
étant entendu que les atomes de carbone de ces anneaux hétéroaromatiques formés de cinq atomes selon les formules (XII) et (XIII) et / ou que les anneaux benzéniques condensés aux anneaux aromatiques formés de cinq atomes peuvent être substitués dans n'importe quelle position par un ou plusieurs groupes R1, R2 ou R3 monovalents qui peuvent être identiques ou différents,
étant entendu que le reste boronique peut être situé dans n'importe quelle position sur les anneaux, et que les anneaux peuvent être substitués dans n'importe quelle position par un ou plusieurs restes monovalents ; R1 et/ou R2 pouvant être identiques ou différents, et étant entendu que l'azote peut être substitué par un reste R3, qui peut

être un reste alkyle, notamment en C1, C2 ou C3.

**15.** Acide boronique obtenu par le procédé selon l'une quelconque des revendications 1 à 14, **caractérisé en ce que** l'acide boronique est sélectionné parmi le groupe formé par : l'acide phénylboronique, l'acide 2-hydroxyphenylboronique, l'acide butylboronique, l'acide 4-terbutyl phénylboronique, l'acide n-butyl boronique, l'acide 4-methoxyphenylboronique, l'acide 3-thienylboronique et l'acide 4-pyridinylboronique.

Europäisches Patentamt
European Patent Office
Office européen des brevets

# RAPPORT DE RECHERCHE EUROPEENNE

Numéro de la demande
EP 14 18 8867

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D<br>A | WO 2013/040479 A1 (DOW AGROSCIENCES LLC [US]; MENNING CATHERINE A [US]; BLAYLOCK D WAYNE) 21 mars 2013 (2013-03-21)<br>* page 9 - page 11; exemple 2 *<br>* page 15; revendication 1 *<br>* figure 1 * | 1-14<br>15 | INV.<br>C07F5/02 |
| Y<br>A | CN 102 190 676 A (BAYER TECHNOLOGY AND ENGINEERING SHANGHAI COMPANY LTD) 21 septembre 2011 (2011-09-21)<br>* page 2; revendication 1 *<br>* page 8; exemple 6 *<br>* figure 2 * | 1-14<br>15 | |
| A,D | WO 03/091262 A1 (SYMYX TECHNOLOGIES INC [US]; BOUSSIE THOMAS R [US]; BRUEMMER OLIVER [D) 6 novembre 2003 (2003-11-06)<br>* page 65, alinéa 151 * | 1-15 | |
| Y<br>A | WO 2012/042130 A1 (AET GROUP [FR]; PILIA RAIMONDO [FR]; TRANI ALEXANDRE [FR]; MARIE SABRI) 5 avril 2012 (2012-04-05)<br>* page 13 *<br>* page 24; revendication 1 * | 1-14<br>15 | DOMAINES TECHNIQUES RECHERCHES (IPC)<br>C07F |
| Y<br>A | WO 2011/001041 A1 (AET GROUP [FR]; MARIE SABRINA [FR]; TRANI ALEXANDRE [FR]; PILIA RAIMON) 6 janvier 2011 (2011-01-06)<br>* page 10 *<br>* page 21; revendication 1 * | 1-14<br>15 | |
| X<br>A | US 2003/100792 A1 (KOCH MANFRED [DE] ET AL) 29 mai 2003 (2003-05-29)<br>* page 3; exemples 1-4 * | 15<br>1-14 | |
| | -/-- | | |

Le présent rapport a été établi pour toutes les revendications

3

| Lieu de la recherche | Date d'achèvement de la recherche | Examinateur |
|---|---|---|
| Munich | 12 février 2015 | Jeanjean, Fabien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches Patentamt
European Patent Office
Office européen des brevets

## RAPPORT DE RECHERCHE EUROPEENNE

Numéro de la demande
EP 14 18 8867

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2010/117285 A2 (ZAKLADY FARM POLPHARMA SA [PL]; SZEJA WIESLAW [PL]; HELMAN JAN [PL]; K) 14 octobre 2010 (2010-10-14)<br>* page 10; revendication 1 *<br>* page 7; exemple 1 *<br>----- | 1-15 | |
| A | KLUMPP G W ET AL: "REAKTIONSWAERMEN ISOMERER (LITHIOARYL)ETHER MIT SIGMA-BUOH",<br>TETRAHEDRON LETTERS, PERGAMON, GB,<br>vol. 27, no. 20,<br>1 janvier 1986 (1986-01-01), pages 2247-2250, XP009004600,<br>ISSN: 0040-4039, DOI: 10.1016/S0040-4039(00)84498-6<br>* page 2247 *<br>----- | 1-15 | |
| A | HEINICKE J ET AL: "ZUR UMSETZUNG VON O-LITHIO-LITHIUMPHENOLAT UND O-LITHIO-N-METHYL-LITHIUMANILID MIT HALOGENIDEN DES PHOSPHORS, ARSENS UND SILIZIUMS",<br>JOURNAL FUER PRAKTISCHE CHEMIE, LEIPZIG, DE,<br>vol. 325, no. 2,<br>1 janvier 1983 (1983-01-01), pages 232-237, XP001062999,<br>ISSN: 0021-8383, DOI: 10.1002/PRAC.19833250208<br>* page 236 *<br>-----<br>-/-- | 1-15 | DOMAINES TECHNIQUES RECHERCHES (IPC) |

Le présent rapport a été établi pour toutes les revendications

3

| Lieu de la recherche | Date d'achèvement de la recherche | Examinateur |
|---|---|---|
| Munich | 12 février 2015 | Jeanjean, Fabien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................
& : membre de la même famille, document correspondant

EPO FORM 1503 03.82 (P04C02)

Europäisches Patentamt
European Patent Office
Office européen des brevets

# RAPPORT DE RECHERCHE EUROPEENNE

Numéro de la demande
EP 14 18 8867

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | TIMO LEERMANN ET AL: "Highly Efficient One-Pot Access to Functionalized Arylboronic Acids via Noncryogenic Bromine/Magnesium Exchanges", ORGANIC LETTERS, vol. 13, no. 17, 2 septembre 2011 (2011-09-02), pages 4479-4481, XP055168977, ISSN: 1523-7060, DOI: 10.1021/ol2016252 | 15 | |
| A | * page 4480; tableau 1; composé 12 * | 1-14 | |
| | ----- | | |
| X | LI W ET AL: "An improved protocol for the preparation of 3-pyridyl- and some arylboronic acids", THE JOURNAL OF ORGANIC CHEMISTRY, AMERICAN CHEMICAL SOCIETY, US, vol. 67, 1 janvier 2002 (2002-01-01), pages 5394-5397, XP002300451, ISSN: 0022-3263, DOI: 10.1021/JO025792P | 15 | |
| A | * page 5396; tableau 1; composé 1 * | 1-14 | |
| | ----- | | DOMAINES TECHNIQUES RECHERCHES (IPC) |
| X | QING F-L ET AL: "Synthesis of 4,6-disubstituted pyrimidines via Suzuki and Kumada coupling reaction of 4,6-dichloropyrimidine", JOURNAL OF FLUORINE CHEMISTRY, ELSEVIER, NL, vol. 120, no. 1, 1 mars 2003 (2003-03-01), pages 21-24, XP004409444, ISSN: 0022-1139, DOI: 10.1016/S0022-1139(02)00279-8 | 15 | |
| A | * page 22; tableau 1; composés 2d, 3 * | 1-14 | |
| | ----- | | |
| X | US 5 514 696 A (MURUGESAN NATESAN [US] ET AL) 7 mai 1996 (1996-05-07) | 15 | |
| A | * colonne 22; exemple 28 * | 1-14 | |
| | ----- | | |
| | -/-- | | |

Le présent rapport a été établi pour toutes les revendications

3

| Lieu de la recherche | Date d'achèvement de la recherche | Examinateur |
|---|---|---|
| Munich | 12 février 2015 | Jeanjean, Fabien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

Europäisches Patentamt
European Patent Office
Office européen des brevets

## RAPPORT DE RECHERCHE EUROPEENNE

Numéro de la demande
EP 14 18 8867

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | YUEN A K L ET AL: "Deprotection of pinacolyl boronate esters via hydrolysis of intermediate potassium trifluoroborates", TETRAHEDRON LETTERS, PERGAMON, GB, vol. 46, no. 46, 14 novembre 2005 (2005-11-14), pages 7899-7903, XP027863593, ISSN: 0040-4039 [extrait le 2005-11-14] | 15 | |
| A | * page 7902; tableau 2; composé 3 * | 1-14 | |
| | ----- | | |

DOMAINES TECHNIQUES RECHERCHES (IPC)

Le présent rapport a été établi pour toutes les revendications

3

| Lieu de la recherche | Date d'achèvement de la recherche | Examinateur |
|---|---|---|
| Munich | 12 février 2015 | Jeanjean, Fabien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 14 18 8867

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-02-2015

| Document brevet cité au rapport de recherche | Date de publication | Membre(s) de la famille de brevet(s) | Date de publication |
|---|---|---|---|
| WO 2013040479 A1 | 21-03-2013 | CA 2847858 A1 | 21-03-2013 |
| | | CN 103827124 A | 28-05-2014 |
| | | CO 6930354 A2 | 28-04-2014 |
| | | EP 2755980 A1 | 23-07-2014 |
| | | JP 2014530193 A | 17-11-2014 |
| | | KR 20140061505 A | 21-05-2014 |
| | | US 2013066115 A1 | 14-03-2013 |
| | | WO 2013040479 A1 | 21-03-2013 |
| CN 102190676 A | 21-09-2011 | AUCUN | |
| WO 03091262 A1 | 06-11-2003 | AT 492552 T | 15-01-2011 |
| | | AU 2003225156 A1 | 10-11-2003 |
| | | CA 2483192 A1 | 06-11-2003 |
| | | EP 1501840 A1 | 02-02-2005 |
| | | JP 4371305 B2 | 25-11-2009 |
| | | JP 2005523921 A | 11-08-2005 |
| | | US 2004005984 A1 | 08-01-2004 |
| | | US 2004010103 A1 | 15-01-2004 |
| | | US 2004014950 A1 | 22-01-2004 |
| | | US 2005080281 A1 | 14-04-2005 |
| | | US 2005164872 A1 | 28-07-2005 |
| | | US 2006211892 A1 | 21-09-2006 |
| | | US 2008269470 A1 | 30-10-2008 |
| | | WO 03091262 A1 | 06-11-2003 |
| WO 2012042130 A1 | 05-04-2012 | EP 2621627 A1 | 07-08-2013 |
| | | FR 2965490 A1 | 06-04-2012 |
| | | JP 2013541533 A | 14-11-2013 |
| | | US 2013303783 A1 | 14-11-2013 |
| | | WO 2012042130 A1 | 05-04-2012 |
| WO 2011001041 A1 | 06-01-2011 | EP 2448895 A1 | 09-05-2012 |
| | | ES 2421740 T3 | 05-09-2013 |
| | | FR 2947545 A1 | 07-01-2011 |
| | | US 2012172632 A1 | 05-07-2012 |
| | | WO 2011001041 A1 | 06-01-2011 |
| US 2003100792 A1 | 29-05-2003 | DE 10140857 A1 | 06-03-2003 |
| | | EP 1285924 A1 | 26-02-2003 |
| | | JP 2003128677 A | 08-05-2003 |
| | | US 2003100792 A1 | 29-05-2003 |
| WO 2010117285 A2 | 14-10-2010 | AUCUN | |
| US 5514696 A | 07-05-1996 | US 5514696 A | 07-05-1996 |

EPO FORM P0460

Pour tout renseignement concernant cette annexe : voir Journal Officiel de l'Office européen des brevets, No.12/82

## ANNEXE AU RAPPORT DE RECHERCHE EUROPEENNE RELATIF A LA DEMANDE DE BREVET EUROPEEN NO. EP 14 18 8867

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-02-2015

| Document brevet cité au rapport de recherche | Date de publication | Membre(s) de la famille de brevet(s) | Date de publication |
|---|---|---|---|
| | | US 6107320 A | 22-08-2000 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2003091262 A
- WO 2013040479 A1


### Littérature non-brevet citée dans la description


- **T. KONAKARA et al.** An expedient synthesis of ellipticine via Suzuki-Miyaura coupling. *Tetrahedron Letters,* 2010, vol. 51 (17), 2335-2338
- **GILMAN et al.** Hydroxybenzeneboronic Acide and Anhydrides. *J. Am. Chem. Soc.,* 1957, vol. 79, 3077-3081
- **YUEN ; HUTTON.** Deprotection of pinacolyl boronate esters via hydrolysis of intermediate potassium trifluoroborates. *Tetrahedron,* 2005, vol. 46, 7899-7903
- **S. MACHEFER et al.** Intensification principle of a new three-phase catalytic slurry reactor. Part I : Performance caracterisation. *Chemical Engineering and Processing,* 2013, vol. 70, 277-288